# EUROPEAN PATENT APPLICATION

(11) **EP 4 797 834 A1**
(43) Date of publication of application: **26.08.2026**
(21) Application number: 24890745.3
(22) Date of filing: 14.11.2024
(51) Int. Cl.: H04W 72/044

(54) **COMMUNICATION METHOD AND COMMUNICATION DEVICE**

(30) Priority: 16.11.2023 CN 202311527175
(71) Applicant: HUAWEI TECHNOLOGIES CO., LTD., Shenzhen 518129 (CN)
(72) Inventor: ZHANG, Yi, Shenzhen, Guangdong 518129 (CN); SELVANESAN, Sarun, Shenzhen, Guangdong 518129 (CN); SU, Hongjia, Shenzhen, Guangdong 518129 (CN)
(74) Representative: Goddar, Heinz J.
(86) International application number: PCT/CN2024/131906
(87) International publication number: WO 2025/103390

(57) **Abstract**

This application provides a communication method and a communication apparatus, and relates to the field of beam management technologies. In the method, a first apparatus sends a sidelink synchronization signal and physical broadcast channel block to a second apparatus, where the sidelink synchronization signal and physical broadcast channel block includes or is associated with a sidelink signal, the sidelink signal indicates at least one target receive end, and the target receive end is a receive end of the sidelink synchronization signal and physical broadcast channel block. The second apparatus may determine, based on the at least one target receive end indicated by the sidelink signal, whether the second apparatus is the target receive end of the sidelink synchronization signal and physical broadcast channel block. If the second apparatus is the target receive end, the second apparatus feeds back the sidelink synchronization signal and physical broadcast channel block. If the second apparatus is not the target receive end, the second apparatus does not feed back the sidelink synchronization signal and physical broadcast channel block. In this way, overall power consumption of the receive end in a beam management process can be reduced.

## Description

This application claims priority to Chinese Patent Application No. 202311527175.3, filed with the China National Intellectual Property Administration on November 16, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Beam management can be for establishing and maintaining a proper beam pair between a transmit end and a receive end. For example, in a beam management process, the transmit end and the receive end traverse candidate beams, determine respective optimal beams based on comparison of beam measurement results, and establish a beam pair between the transmit end and the receive end. For example, an optimal transmit beam of the transmit end and an optimal receive beam of the receive end may form a beam pair.

In a beam management process between a transmit end and a receive end in a sidelink (sidelink, SL) scenario, the transmit end may send a sidelink synchronization signal and physical broadcast channel block (sidelink synchronization signal and physical broadcast channel block, S-SSB) to the receive end, the receive end measures the S-SSB and sends a measurement result of the S-SSB to the transmit end, and the transmit end may determine, based on the measurement result of the S-SSB, whether a beam corresponding to the S-SSB is an optimal beam.

However, overall power consumption of the receive end in the foregoing beam management process is high. For example, the receive end needs to measure and feed back all received S-SSBs. Therefore, how to reduce the overall power consumption of the receive end in the beam management process is an urgent technical problem to be resolved currently.

### SUMMARY

This application provides a communication method and a communication apparatus, to reduce overall power consumption of a receive end in a beam management process.

According to a first aspect, a communication method is provided. The communication method includes: determining a sidelink synchronization signal and physical broadcast channel block, where the sidelink synchronization signal and physical broadcast channel block includes a sidelink signal, or the sidelink synchronization signal and physical broadcast channel block is associated with the sidelink signal, and the sidelink signal indicates at least one target receive end; and sending the sidelink synchronization signal and physical broadcast channel block.

An execution entity of the solution in the first aspect may be a first apparatus, or may be a module such as a chip system in the first apparatus, or may be a logical node, a logical module, or software that can implement all or some functions of the first apparatus. This is not limited. For ease of description, the following uses the first apparatus as an example for description.

The first apparatus sends the sidelink synchronization signal and physical broadcast channel block to a second apparatus, where the sidelink synchronization signal and physical broadcast channel block includes or is associated with the sidelink signal, the sidelink signal indicates the at least one target receive end, and the target receive end is a receive end of the sidelink synchronization signal and physical broadcast channel block. The second apparatus may determine, based on the at least one target receive end indicated by the sidelink signal, whether the second apparatus is the target receive end of the sidelink synchronization signal and physical broadcast channel block. If the second apparatus is the target receive end, the second apparatus feeds back the sidelink synchronization signal and physical broadcast channel block. If the second apparatus is not the target receive end, the second apparatus does not feed back the sidelink synchronization signal and physical broadcast channel block.

In a possible implementation, the sending the sidelink synchronization signal and physical broadcast channel block may include: sending the sidelink signal and the sidelink synchronization signal and physical broadcast channel block.

The sidelink signal may be included in the sidelink synchronization signal and physical broadcast channel block, or may be independent of the sidelink synchronization signal and physical broadcast channel block. This is not limited. When the sidelink signal is included in the sidelink synchronization signal and physical broadcast channel block, the sidelink signal and the sidelink synchronization signal and physical broadcast channel block may be sent by using same information, or the sidelink signal and the sidelink synchronization signal and physical broadcast channel block may be sent simultaneously. This may be understood as that the first apparatus sends the sidelink signal and the sidelink synchronization signal and physical broadcast channel block to the second apparatus. In this way, the second apparatus can determine, based on the sidelink signal, whether the second apparatus is the target receive end of the sidelink synchronization signal and physical broadcast channel block.

When the sidelink signal is independent of the sidelink synchronization signal and physical broadcast channel block, the sidelink signal and the sidelink synchronization signal and physical broadcast channel block may be sent by using two different pieces of information, or the sidelink signal and the sidelink synchronization signal and physical broadcast channel block may not be sent simultaneously. This may be understood as that the first apparatus separately sends the sidelink signal and the sidelink synchronization signal and physical broadcast channel block to the second apparatus. In this way, the second apparatus can determine, based on the sidelink signal, whether the second apparatus is the target receive end of the sidelink synchronization signal and physical broadcast channel block.

In comparison with a solution in which the second apparatus feeds back all received sidelink synchronization signal and physical broadcast channel blocks, in the foregoing solution, the second apparatus can feed back only a sidelink synchronization signal and physical broadcast channel blocks whose target receive end is the second apparatus. In this way, overall power consumption of the receive end in a beam management process can be effectively reduced, and resource overheads of the receive end can be further effectively reduced. For example, the receive end does not need to feed back a measurement result of each sidelink synchronization signal and physical broadcast channel block to a transmit end.

In conclusion, when sending the sidelink synchronization signal and physical broadcast channel block to the receive end, the transmit end may further indicate, to the receive end, whether the receive end is the target receive end of the sidelink synchronization signal and physical broadcast channel block, so that the receive end can feed back only a sidelink synchronization signal and physical broadcast channel block whose target receive end is the receive end. This helps reduce overall power consumption of the receive end in the beam management process, and can further effectively reduce resource overheads of the receive end.

In the first aspect, the determining the sidelink synchronization signal and physical broadcast channel block includes: determining at least two sidelink synchronization signal and physical broadcast channel blocks, where the at least two sidelink synchronization signal and physical broadcast channel blocks are associated with at least two sidelink signals, and a one-to-one mapping relationship exists between a position of a time-frequency resource occupied by each of the at least two sidelink synchronization signal and physical broadcast channel blocks and a position of a time-frequency resource occupied by a corresponding sidelink signal in the at least two sidelink signals. The sending the sidelink synchronization signal and physical broadcast channel block includes: sending the at least two sidelink synchronization signal and physical broadcast channel blocks.

When the first apparatus sends a plurality of sidelink synchronization signal and physical broadcast channel blocks to the second apparatus, a one-to-one mapping relationship exists between a position of a time-frequency resource occupied by each sidelink synchronization signal and physical broadcast channel block and a position of a time-frequency resource occupied by a corresponding sidelink signal. When receiving the plurality of sidelink synchronization signal and physical broadcast channel blocks, the second apparatus may determine an associated sidelink signal based on the mapping relationship between the sidelink synchronization signal and physical broadcast channel block and the sidelink signal, and determine whether a target receive end indicated by each sidelink signal is the second apparatus. The second apparatus may feed back only a sidelink synchronization signal and physical broadcast channel block whose target receive end is the second apparatus.

In this way, overall power consumption of the receive end in the beam management process can be effectively reduced, and resource overheads of the receive end can be effectively reduced.

According to a second aspect, a communication method is provided. The communication method includes: receiving a sidelink synchronization signal and physical broadcast channel block, where the sidelink synchronization signal and physical broadcast channel block includes a sidelink signal, or the sidelink synchronization signal and physical broadcast channel block is associated with the sidelink signal, and the sidelink signal indicates at least one target receive end; and determining a target receive end of the sidelink synchronization signal and physical broadcast channel block based on the sidelink signal.

An execution entity of the solution in the second aspect may be a second apparatus, or may be a module such as a chip system in the second apparatus, or may be a logical node, a logical module, or software that can implement all or some functions of the second apparatus. This is not limited. For ease of description, the following uses the second apparatus as an example for description.

A first apparatus sends the sidelink synchronization signal and physical broadcast channel block to the second apparatus, where the sidelink synchronization signal and physical broadcast channel block includes or is associated with the sidelink signal, the sidelink signal indicates the at least one target receive end, and the target receive end is a receive end of the sidelink synchronization signal and physical broadcast channel block. The second apparatus may determine, based on the at least one target receive end indicated by the sidelink signal, whether the second apparatus is the target receive end of the sidelink synchronization signal and physical broadcast channel block. If the second apparatus is the target receive end, the second apparatus feeds back the sidelink synchronization signal and physical broadcast channel block. If the second apparatus is not the target receive end, the second apparatus does not feed back the sidelink synchronization signal and physical broadcast channel block.

In a possible implementation, the receiving the sidelink synchronization signal and physical broadcast channel block may include: receiving the sidelink signal and the sidelink synchronization signal and physical broadcast channel block.

The sidelink signal may be included in the sidelink synchronization signal and physical broadcast channel block, or may be independent of the sidelink synchronization signal and physical broadcast channel block. This is not limited. When the sidelink signal is included in the sidelink synchronization signal and physical broadcast channel block, the sidelink signal and the sidelink synchronization signal and physical broadcast channel block may be sent by using same information, or the sidelink signal and the sidelink synchronization signal and physical broadcast channel block may be sent simultaneously. This may be understood as that the first apparatus sends the sidelink signal and the sidelink synchronization signal and physical broadcast channel block to the second apparatus. In this way, the second apparatus can determine, based on the sidelink signal, whether the second apparatus is the target receive end of the sidelink synchronization signal and physical broadcast channel block.

When the sidelink signal is independent of the sidelink synchronization signal and physical broadcast channel block, the sidelink signal and the sidelink synchronization signal and physical broadcast channel block may be sent by using two different pieces of information, or the sidelink signal and the sidelink synchronization signal and physical broadcast channel block may not be sent simultaneously. This may be understood as that the first apparatus separately sends the sidelink signal and the sidelink synchronization signal and physical broadcast channel block to the second apparatus. In this way, the second apparatus can determine, based on the sidelink signal, whether the second apparatus is the target receive end of the sidelink synchronization signal and physical broadcast channel block. In comparison with a solution in which the second apparatus feeds back all received sidelink synchronization signal and physical broadcast channel blocks, in the foregoing solution, the second apparatus can feed back only a sidelink synchronization signal and physical broadcast channel blocks whose target receive end is the second apparatus. In this way, overall power consumption of the receive end in a beam management process can be effectively reduced, and resource overheads of the receive end can be further effectively reduced.

In conclusion, when sending the sidelink synchronization signal and physical broadcast channel block to the receive end, a transmit end may further indicate, to the receive end, whether the receive end is the target receive end of the sidelink synchronization signal and physical broadcast channel block, so that the receive end can feed back only a sidelink synchronization signal and physical broadcast channel block whose target receive end is the receive end. This helps reduce overall power consumption of the receive end in the beam management process, and further helps reduce resource overheads of the receive end.

In a second aspect, the method further includes: sending a measurement result of the sidelink synchronization signal and physical broadcast channel block.

When it is determined that the second apparatus is the target receive end of the sidelink synchronization signal and physical broadcast channel block, the second apparatus measures the sidelink synchronization signal and physical broadcast channel block, and sends the measurement result of the sidelink synchronization signal and physical broadcast channel block to the first apparatus. This helps implement beam management between the first apparatus and the second apparatus, and can determine a proper beam pair between the first apparatus and the second apparatus.

In the second aspect, the receiving the sidelink synchronization signal and physical broadcast channel block includes: receiving at least two sidelink synchronization signal and physical broadcast channel blocks, where the at least two sidelink synchronization signal and physical broadcast channel blocks are associated with at least two sidelink signals, and a one-to-one mapping relationship exists between a position of a time-frequency resource occupied by each of the at least two sidelink synchronization signal and physical broadcast channel blocks and a position of a time-frequency resource occupied by a corresponding sidelink signal in the at least two sidelink signals.

When the first apparatus sends a plurality of sidelink synchronization signal and physical broadcast channel blocks to the second apparatus, a one-to-one mapping relationship exists between a position of a time-frequency resource occupied by each sidelink synchronization signal and physical broadcast channel block and a position of a time-frequency resource occupied by a corresponding sidelink signal. When receiving the plurality of sidelink synchronization signal and physical broadcast channel blocks, the second apparatus may determine an associated sidelink signal based on the mapping relationship between the sidelink synchronization signal and physical broadcast channel block and the sidelink signal, and determine whether a target receive end indicated by each sidelink signal is the second apparatus. The second apparatus may feed back only a sidelink synchronization signal and physical broadcast channel block whose target receive end is the second apparatus.

In this way, overall power consumption of the receive end in the beam management process can be effectively reduced, and resource overheads of the receive end can be effectively reduced.

With reference to the solutions according to any one of the first aspect and the second aspect, the sidelink signal includes a sidelink primary synchronization signal sequence and/or a sidelink secondary synchronization signal sequence, and the sidelink primary synchronization signal sequence and/or the sidelink secondary synchronization signal sequence indicate/indicates the at least one target receive end.

The sidelink primary synchronization signal sequence and the sidelink secondary synchronization signal sequence are orthogonal sequences of each other. Different target receive ends may be distinguished by using orthogonality between sequences, or different target receive ends may be represented by using a combination of different sequences. In this way, target receive ends can be distinguished.

With reference to the solutions according to any one of the first aspect and the second aspect, the sidelink signal includes a physical sidelink feedback channel, and a frequency domain resource corresponding to the physical sidelink feedback channel and/or a cyclic shift in the frequency domain resource indicate/indicates the at least one target receive end.

Different frequency domain resources and cyclic shifts may represent different target receive ends, and different target receive ends can be distinguished.

With reference to the solutions according to any one of the first aspect and the second aspect, the sidelink signal includes a reference signal, and a position of a time-frequency resource corresponding to the reference signal indicates the at least one target receive end.

Positions of time-frequency resources corresponding to different reference signals may represent different target receive ends, and different target receive ends can be distinguished.

With reference to the solutions according to any one of the first aspect and the second aspect, the reference signal is in a physical sidelink broadcast channel included in the sidelink signal.

In this way, a design of reusing a physical sidelink broadcast channel in an existing standard can be used, to avoid a large degree of modification to the existing standard.

With reference to the solutions according to any one of the first aspect and the second aspect, the sidelink signal includes at least one piece of identification information, and the at least one piece of identification information is in one-to-one correspondence with the at least one target receive end.

In this way, the target receive end can be indicated.

With reference to the solutions according to any one of the first aspect and the second aspect, the sidelink synchronization signal and physical broadcast channel block indicates a transmit end.

In this way, the second apparatus can determine the transmit end of the sidelink synchronization signal and physical broadcast channel block, and this helps feed back the measurement result of the sidelink synchronization signal and physical broadcast channel block to a corresponding apparatus.

In a possible implementation, the sidelink synchronization signal and physical broadcast channel block may indicate both the transmit end and the target receive end.

Specifically, the sidelink signal in the sidelink synchronization signal and physical broadcast channel block indicates the transmit end, and the sidelink primary synchronization signal sequence and the sidelink secondary synchronization signal sequence in the sidelink synchronization signal and physical broadcast channel block indicate the target receive end; or the sidelink signal in the sidelink synchronization signal and physical broadcast channel block indicates the target receive end, and the sidelink primary synchronization signal sequence and the sidelink secondary synchronization signal sequence in the sidelink synchronization signal and physical broadcast channel block indicate the transmit end. In this way, the second apparatus can determine the transmit end and the target receive end of the sidelink synchronization signal and physical broadcast channel block.

In a possible implementation, the sidelink synchronization signal and physical broadcast channel block may indicate the target receive end, and the sidelink signal indicates the transmit end. When the target receive end is indicated by using the sidelink synchronization signal and physical broadcast channel block, the target receive end may be indicated by using the sidelink primary synchronization signal sequence and the sidelink secondary synchronization signal sequence in the sidelink synchronization signal and physical broadcast channel block, and the transmit end may be indicated by using the sidelink signal. In this way, the second apparatus can determine the transmit end and the target receive end of the sidelink synchronization signal and physical broadcast channel block.

With reference to the solutions according to any one of the first aspect and the second aspect, the reference signal is a sidelink channel state information reference signal or a sidelink demodulation reference signal.

In this way, the target receive end can be indicated by using a position of a time-frequency resource corresponding to the sidelink channel state information reference signal, or the target receive end can be indicated by using a position of a time-frequency resource corresponding to the sidelink demodulation reference signal.

According to a third aspect, a communication apparatus is provided. The communication apparatus includes: a processing unit, configured to determine a sidelink synchronization signal and physical broadcast channel block, where the sidelink synchronization signal and physical broadcast channel block includes a sidelink signal, or the sidelink synchronization signal and physical broadcast channel block is associated with the sidelink signal, and the sidelink signal indicates at least one target receive end; and an interface unit, configured to send the sidelink synchronization signal and physical broadcast channel block.

The communication apparatus according to the third aspect may be configured to perform the method according to any one of the first aspect and the possible implementations of the first aspect. For details, refer to the descriptions of the method according to any one of the first aspect and the possible implementations of the first aspect. Details are not described again.

According to a fourth aspect, a communication apparatus is provided. The communication apparatus includes: an interface unit, configured to receive a sidelink synchronization signal and physical broadcast channel block, where the sidelink synchronization signal and physical broadcast channel block includes a sidelink signal, or the sidelink synchronization signal and physical broadcast channel block is associated with the sidelink signal, and the sidelink signal indicates at least one target receive end; and a processing unit, configured to determine a target receive end of the sidelink synchronization signal and physical broadcast channel block based on the sidelink signal.

The communication apparatus according to the fourth aspect may be configured to perform the method according to any one of the second aspect and the possible implementations of the second aspect. For details, refer to the descriptions of the method according to any one of the second aspect and the possible implementations of the second aspect. Details are not described again.

According to a fifth aspect, an embodiment of this application provides a communication apparatus. The communication apparatus includes a module configured to perform the method according to all possible implementations of the first aspect or the second aspect.

According to a sixth aspect, an embodiment of this application provides a communication apparatus. The communication apparatus includes an interface circuit and a processor. The communication apparatus is configured to perform any one of the possible implementations of the first aspect or the second aspect.

The interface circuit may alternatively be a communication interface. The processor may alternatively be a logic circuit or a processing circuit.

According to a seventh aspect, an embodiment of this application provides a computer-readable medium. The computer-readable medium stores program code to be executed by a terminal device. The program code includes instructions for performing any one of the possible implementations of the first aspect or the second aspect.

According to an eighth aspect, an embodiment of this application provides a computer program product storing computer-readable instructions. When the computer-readable instructions are run on a computer, the computer is caused to perform any one of the possible implementations of the first aspect or the second aspect.

According to a ninth aspect, an embodiment of this application provides a communication system. The communication system includes an apparatus that has a function of implementing any one of the possible implementations of the first aspect or the second aspect.

According to a tenth aspect, an embodiment of this application provides a processor, configured to be coupled to a memory and configured to perform any one of the possible implementations of the first aspect or the second aspect.

According to an eleventh aspect, a communication apparatus is provided. The communication apparatus includes a processor, configured to execute computer instructions stored in a memory, to cause the communication apparatus to perform the method according to any one of the possible implementations of the first aspect or the second aspect.

In a possible implementation, the communication apparatus further includes the memory.

In a possible implementation, the communication apparatus further includes a communication interface. The communication interface is coupled to the processor, and the communication interface is configured to input and/or output information.

According to a twelfth aspect, a chip is provided. The chip is connected to a memory, and the chip is configured to read and execute a software program stored in the memory, to perform the method according to any one of the possible implementations of the first aspect or the second aspect.

### BRIEF DESCRIPTION OF DRAWINGS

FIG. 1 is a diagram of a communication system applicable to an embodiment of this application;
FIG. 2 is a diagram of a time domain structure of an S-SSB;
FIG. 3 is a diagram of beam management;
FIG. 4 is a schematic flowchart of interaction of a communication method according to an embodiment of this application;
FIG. 5 is a diagram of a time-frequency resource corresponding to a reference signal according to an embodiment of this application;
FIG. 6 is another diagram of a time-frequency resource corresponding to a reference signal according to an embodiment of this application;
FIG. 7 is a diagram of a time-frequency resource of a physical sidelink feedback channel according to an embodiment of this application;
FIG. 8 is a diagram of a correspondence between an S-SSB and a sidelink signal according to an embodiment of this application;
FIG. 9 is a diagram of another correspondence between an S-SSB and a sidelink signal according to an embodiment of this application;
FIG. 10 is a diagram of a correspondence between an S-SSB and a report occasion according to an embodiment of this application;
FIG. 11 is a block diagram of a communication apparatus according to an embodiment of this application; and
FIG. 12 is a block diagram of another communication apparatus according to an embodiment of this application.

### DESCRIPTION OF EMBODIMENTS

The following describes technical solutions of this application with reference to accompanying drawings.

For ease of understanding of embodiments of this application, the following several descriptions are provided first.
1. Unless otherwise specified, "a plurality of" means two or more.
2. Unless otherwise particularly stated or there is a logic conflict, terms and/or descriptions in different embodiments of this application are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.
4. The terms "include", "have", and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in a plurality of manners, for example, but not limited to, the to-be-enabled information, such as the to-be-enabled information or an index of the to-be-enabled information, may be directly enabled. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all the information may be identified and enabled in a unified manner, to reduce enabling overheads caused by enabling the same information separately.
6. In this application, the term "preconfigure" may include predefine, for example, define in a protocol. The "predefine" may be implemented by prestoring, in a device (including, for example, network elements), corresponding code, a corresponding table, or other related information that may be used for indication. A specific implementation thereof is not limited in this application.
7. "Storage" or "store" in this application may mean "being stored" in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
8. The "protocol" in this application may be a standard protocol in the communication field, for example, may include a 4th generation (4th generation, 4G) network protocol, a 5th generation (5th generation, 5G) network protocol, an NR protocol, a 5.5G network protocol, a 6th generation (6th generation, 6G) network protocol, and a related protocol applied to a future communication system. This is not limited in this application.
9. Arrows or blocks shown by dashed lines in diagrams of the accompanying drawings in this specification of this application indicate optional steps or optional modules.
10. Unless otherwise stated, "/" indicates an "or" relationship between associated objects, for example, A/B may represent A or B. The term "and/or" in this application describes only an association relationship between associated objects, and indicates that three relationships may exist. For example, A and/or B may represent three cases: Only A exists, both A and B exist, and only B exists, where A and B may be singular or plural.

First, a communication system applicable to embodiments of this application is described.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, a system such as a 6th generation (6th generation, 6G) system evolved after 5G, and a non-terrestrial communication network (non-terrestrial network, NTN) system such as an inter-satellite communication system or a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low-earth orbit satellite, a medium-earth orbit satellite, or a high-earth orbit satellite.

The technical solutions in embodiments of this application are applicable to both a homogeneous network scenario and a heterogeneous network scenario. In addition, a transmission point is not limited. Coordinated multi-point transmission may be performed between macro base stations, between micro base stations, and between a macro base station and a micro base station. The technical solutions are applicable to the FDD/TDD system. The technical solutions in embodiments of this application are not only applicable to a low-frequency scenario (sub 6G), but also applicable to a high-frequency scenario (above 6 GHz), terahertz, optical communication, and the like. The technical solutions in embodiments of this application are not only applicable to communication between a network device and a terminal, but also applicable to communication between network devices, communication between terminals, and communication in an internet of vehicles, communication in an internet of things, communication in an industrial internet, and the like.

The technical solutions in embodiments of this application may alternatively be applied to a scenario in which a terminal is connected to a single base station. The base station connected to the terminal and a core network (core network, CN) connected to the base station are of a same standard. For example, if the CN is a 5G core, a corresponding base station is a 5G base station, and the 5G base station is directly connected to the 5G core; or if the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application are alternatively applicable to a macro-micro scenario including different forms of base stations in a communication network. For example, the base station may be a satellite, an air balloon station, or an uncrewed aerial vehicle station. The technical solutions in embodiments of this application are also applicable to a scenario in which both a wide-coverage base station and a small-coverage base station exist.

The technical solutions in embodiments of this application may be further applied to a 5.5G wireless communication system, a 6G wireless communication system, and a wireless communication system after 5.5G and 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, an indoor commercial scenario, and the like.

The technical solutions in embodiments of this application may be further applied to SL communication between terminal devices that directly communicate with each other. In other words, both a shared channel and a feedback channel are transmitted and received between the terminal devices.

It should be understood that the technical solutions in embodiments of this application are further applicable to a scenario such as an indoor commercial scenario, for example, a scenario in which a mobile phone performs high-definition projection to a large screen or a mobile phone transmits a VR video to VR glasses.

The terminal device in embodiments of this application is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, an on-board unit (on-board unit, OBU), a remote information processing unit (telematics BOX, T-BOX), a vehicle, a roadside unit (road side unit, RSU), a chip, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a compute device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

An apparatus configured to implement a function of the terminal device may be a terminal device, or may be an apparatus that can support the terminal device in implementing the function, for example, a chip system. The apparatus may be mounted in the terminal device or used in combination with the terminal device. In embodiments of this application, the chip system may include a chip, or may include a chip and another discrete component.

The network device in embodiments of this application is a device having a wireless transceiver function, and is configured to communicate with the terminal device. The network device may be a node in a radio access network (radio access network, RAN), and may be referred to as a base station, or may be referred to as a RAN node. The network device may be an evolved NodeB (evolved NodeB, eNB or eNodeB) in LTE, a base station in a 5G network such as a gNodeB (gNB), a base station in a public land mobile network (public land mobile network, PLMN) evolved after 5G, a broadband network service gateway (broadband network gateway, BNG), an aggregation switch, a 3GPP access device, or the like.

The network device in embodiments of this application may further include various forms of base stations, for example, a macro base station, a micro base station (also referred to as a small cell), a relay station, a transmitting and receiving point (transmitting and receiving point, TRP), a transmitting point (transmitting point, TP), a mobile switching center, and a device that undertakes a base station function in device-to-device (device-to-device, D2D), vehicle-to-everything (vehicle-everything, V2X), and machine-to-machine (machine-to-machine, M2M) communication. The network device may further include a central unit (central unit, CU) and a distributed unit (distributed unit, DU) in a cloud radio access network (cloud radio access network, C-RAN) system, and a network device in an NTN communication system. This is not specifically limited in embodiments of this application.

An apparatus configured to implement a function of the network device may be a network device, or may be an apparatus that can support the network device in implementing the function, for example, a chip system. The apparatus may be mounted in the network device or used in combination with the network device. In embodiments of this application, the chip system may include a chip, or may include a chip and another discrete component.

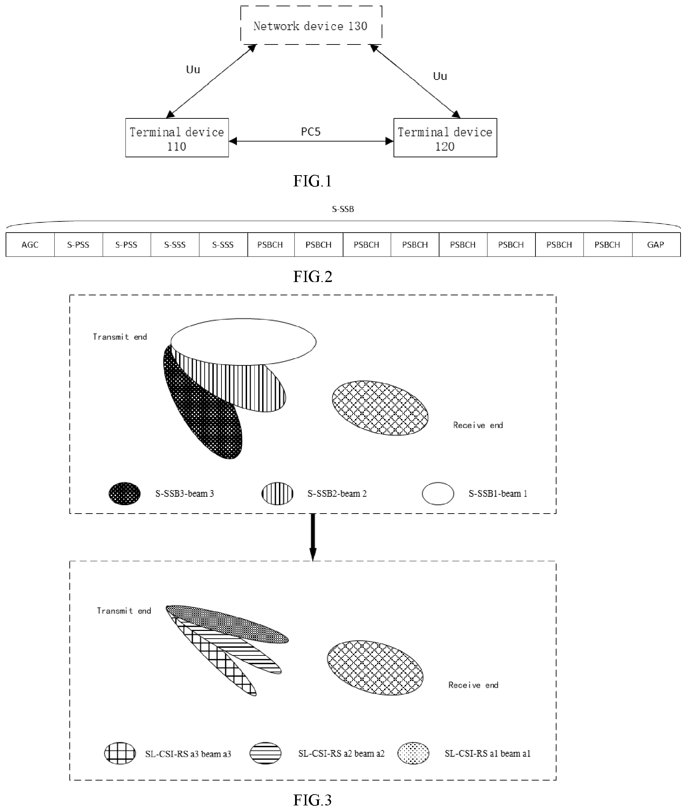

FIG. 1 is a diagram of a communication system applicable to an embodiment of this application. As shown in FIG. 1, the communication system includes a terminal device 110 and a terminal device 120. The terminal device 110 and the terminal device 120 may be any terminal device listed above. The terminal device 110 may communicate with the terminal device 120 through a PC5 interface. In other words, the terminal device 110 performs SL communication with the terminal device 120.

Optionally, the communication system may further include a network device 130, and the terminal device (for example, the terminal device 110 or the terminal device 120) communicates with the network device 130 through an air interface (a Uu interface).

A first apparatus and a second apparatus described below may be the foregoing terminal device 110 and the foregoing terminal device 120.

To better understand embodiments of this application, terms in this application are first briefly described. These explanations are intended to make embodiments of this application easier to understand, but should not be construed as a limitation on the protection scope claimed in this application.

### 1. Sidelink synchronization signal and physical broadcast channel block (S-SSB)

A sidelink primary synchronization signal (sidelink primary synchronization signal, S-PSS), a sidelink secondary synchronization signal (sidelink secondary synchronization signal, S-SSS), and a physical sidelink broadcast channel (physical sidelink broadcast channel, PSBCH) jointly form an S-SSB.

For a time domain structure of the S-SSB, refer to FIG. 2.

FIG. 2 is a diagram of a time domain structure of an S-SSB. As shown in FIG. 2, a slot length of the S-SSB includes 14 orthogonal frequency division multiplexing (orthogonal frequency division multiplexing, OFDM) symbols. A symbol 0 is used for automatic gain control (automatic gain control, AGC) (or may be a PSBCH). A 1^{st} symbol and a 2^{nd} symbol are used for S-PSS sequence transmission. A 3^{rd} symbol and a 4^{th} symbol are used for S-SSS sequence transmission. A last symbol is a gap (gap, GAP) symbol, and is used for transmission and reception switching. Remaining symbols are used for PSBCH transmission.

In this embodiment of this application, the S-SSB not only can be used for synchronization management between a transmit end and a receive end, but also can be used for beam management between the transmit end and the receive end.

For how to schedule the S-SSB, refer to descriptions in an existing standard. Details are not described.

### 2. Beam management

The beam management can be used to establish and maintain a proper beam pair between a transmit end and a receive end. For example, the transmit end needs to select a proper transmit beam, and the receive end needs to select a proper receive beam. The transmit beam and the receive beam form a beam pair, so that a good wireless connection between the transmit end and the receive end can be maintained.

For further descriptions of the beam management, refer to FIG. 3.

FIG. 3 is a diagram of beam management. As shown in FIG. 3, a transmit end sends an S-SSB1 (corresponding to a beam 1) toward a direction of the beam 1, sends an S-SSB2 (corresponding to a beam 2) toward a direction of the beam 2, and sends an S-SSB3 (corresponding to a beam 3) toward a direction of the beam 3. The receive end receives the S-SSB1, the S-SSB2, and the S-SSB3, measures the S-SSBs to obtain measurement results of the S-SSBs, and reports the measurement results of the S-SSBs to the transmit end. The transmit end determines, based on the measurement results of the three S-SSBs reported by the receive end, that the measurement result of the S-SSB2 is better than the measurement result of the S-SSB1 and the measurement result of the S-SSB3.

Further, the transmit end may further divide the beam 2 to obtain three sub-beams: a beam a1, a beam a2, and a beam a3, and separately send a sidelink channel state information reference signal (sidelink channel state information reference signal, SL-CSI-RS) a1 (corresponding to the beam a1), an SL-CSI-RS a2 (corresponding to the beam a2), and an SL-CSI-RS a3 (corresponding to the beam a3). The receive end receives the SL-CSI-RS a1, the SL-CSI-RS a2, and the SL-CSI-RS a3, measures the SL-CSI-RSs to obtain measurement results of the SL-CSI-RSs, and reports the measurement results of the SL-CSI-RSs to the transmit end. The transmit end determines, based on the measurement results of the three SL-CSI-RSs reported by the receive end, that the measurement result of the SL-CSI-RS a2 is better than the measurement result of the SL-CSI-RS a1 and the measurement result of the SL-CSI-RS a3. The transmit end may determine that the sub-beam corresponding to the SL-CSI-RS a2 is an optimal transmit beam.

The receive end may also determine a proper receive beam based on the foregoing process.

However, in the beam management process shown in FIG. 3 (mainly focusing on an S-SSB sweeping process), overall power consumption of the receive end is high.

In view of this, this application provides a communication method and a communication apparatus, to reduce overall power consumption of a receive end in a beam management process.

The following describes the communication method and the communication apparatus in embodiments of this application with reference to the accompanying drawings.

For ease of understanding and description, the following describes the communication method in embodiments of this application by using interaction between a first apparatus and a second apparatus as an example. However, this shall not constitute any limitation on an execution entity of the communication method in embodiments of this application. For example, the method performed by the first apparatus may be performed by a module (for example, a circuit, a chip, or a chip system) in the first apparatus, or may be implemented by a logical node, a logical module, or software that can implement all or some functions of the first apparatus. For example, the method performed by the second apparatus may be performed by a module (for example, a circuit, a chip, or a chip system) in the second apparatus, or may be implemented by a logical node, a logical module, or software that can implement all or some functions of the second apparatus.

The foregoing apparatus may be a communication device or a device, or a component or a chip system in the device. For example, the first apparatus is a first device, a first component, or a first chip. For example, the second apparatus is a second device, a second component, or a second chip.

Both the first apparatus and the second apparatus may be terminal devices. Alternatively, both the first apparatus and the second apparatus may be components/modules in the terminal devices. Alternatively, the first apparatus is a terminal device, and the second apparatus is a component/module in the terminal device. Alternatively, the first apparatus is a component/module in a terminal device, and the second apparatus is the terminal device. This is not limited.

In addition, the second apparatus may represent one apparatus, or may represent a plurality of apparatuses. For ease of description, the following uses an example in which the second apparatus represents one apparatus for description.

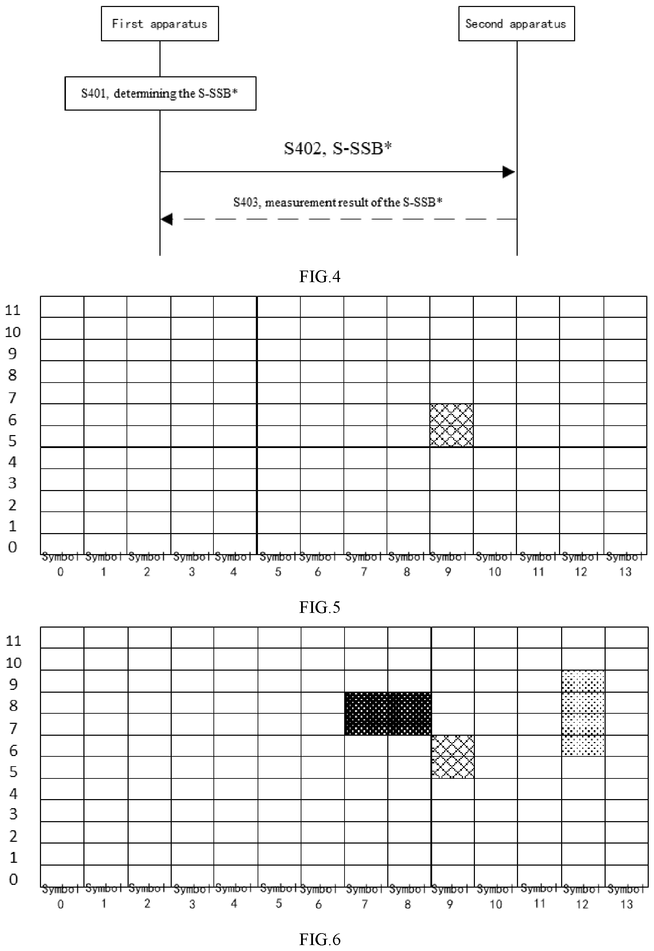

FIG. 4 is a schematic flowchart of interaction of a communication method according to an embodiment of this application. As shown in FIG. 4, the method includes the following steps.

S401: A first apparatus determines an S-SSB*.

The S-SSB* can be used for beam management between the first apparatus and a second apparatus. The S-SSB* represents any S-SSB.

Optionally, the S-SSB* may be further used for synchronization management between the first apparatus and the second apparatus. For a time domain structure of the S-SSB*, refer to FIG. 2. Details are not described again.

The first apparatus is a transmit end, and the second apparatus is a receive end. To enable the second apparatus to determine whether the S-SSB* needs to be measured and/or fed back, this application supports processing on the S-SSB*, so that the second apparatus can determine whether the second apparatus is a target receive end of the S-SSB*.

In a possible implementation, the S-SSB* includes a sidelink signal * (or the sidelink signal * is carried in the S-SSB*), and indicates at least one target receive end, where the target receive end is the target receive end of the S-SSB*.

In another possible implementation, the S-SSB* is associated with a sidelink signal * (or the sidelink signal * is carried outside the S-SSB*), and indicates at least one target receive end, where the target receive end is the target receive end of the S-SSB*.

In an example, the target receive end may be understood as a receive end that needs to measure and/or feed back the S-SSB*.

For example, both the second apparatus and a third apparatus receive the S-SSB*. The second apparatus needs to measure and feed back the S-SSB*, and in this case, the second apparatus is the target receive end of the S-SSB*. The third apparatus does not need to measure and/or feed back the S-SSB*, and in this case, the third apparatus is not the target receive end of the S-SSB*.

In another example, the target receive end may be further understood as a receive end that needs to measure and/or feedback a beam corresponding to the S-SSB*.

For example, both the second apparatus and the third apparatus receive the S-SSB*. The second apparatus needs to determine a measurement result of the beam corresponding to the S-SSB*, and needs to send the measurement result to the first apparatus. In this case, the second apparatus is the target receive end of the S-SSB*. The third apparatus does not need to determine a measurement result of the beam corresponding to the S-SSB*, and does not need to send the measurement result to the first apparatus. In this case, the third apparatus is not the target receive end of the S-SSB*. Alternatively, the third apparatus needs to determine a measurement result of the beam corresponding to the S-SSB*, but does not need to send the measurement result to the first apparatus. In this case, the third apparatus is not the target receive end of the S-SSB*.

In a possible implementation, the sidelink signal * includes identification information of the target receive end, and the second apparatus may determine, by comparing whether the identification information included in the sidelink signal * is completely or partially consistent with identification information of the second apparatus, whether the second apparatus is the target receive end of the S-SSB*. In this way, the target receive end can be indicated.

In a possible implementation, the sidelink signal * may further indicate at least one receive end. For example, the S-SSB* includes a sidelink signal *, or the S-SSB* is associated with the sidelink signal *. The apparatus that receives the S-SSB* may determine, based on the sidelink signal *, whether the apparatus is a receive end of the S-SSB*.

For example, both the second apparatus and the third apparatus receive the S-SSB*, and determine, depending on whether the at least one receive end indicated by the sidelink signal * includes the second apparatus and the third apparatus, whether the second apparatus and the third apparatus are receive ends. For example, the second apparatus may determine, based on that the at least one receive end indicated by the sidelink signal * includes the second apparatus (for example, the identification information of the second apparatus may be indicated by using the sidelink signal *), that the second apparatus is the receive end of the S-SSB*; and the third apparatus may determine, based on that the at least one receive end indicated by the sidelink signal * does not include the third apparatus, that the third apparatus is not the receive end of the S-SSB*.

In this embodiment of this application, that the sidelink signal * indicates the at least one target receive end may be that the sidelink signal * includes at least one piece of identification information, and the identification information is in one-to-one correspondence with the target receive end. For example, the sidelink signal * includes the identification information of the second apparatus, and the second apparatus determines, based on the identification information of the second apparatus included in the sidelink signal *, that the second apparatus is the target receive end of the S-SSB*. For another example, the sidelink signal * does not include identification information of the third apparatus, and the third apparatus determines, based on that the sidelink signal * does not include the identification information of the third apparatus, that the third apparatus is not the target receive end of the S-SSB*.

The identification information may be an identifier of an apparatus, or may be other information that can be used to distinguish between different apparatuses, for example, index information. This is not limited.

In a possible implementation, the target receive end is determined by the first apparatus based on indication information, and the indication information is from a V2X application layer ID. For example, there is historical communication between the first apparatus and the target receive end (or there is a link establishment process between the first apparatus and the target receive end). The first apparatus may determine the identification information of the target receive end based on the historical communication, and then indicate the target receive end by using the sidelink signal *.

In another possible implementation, the target receive end is determined by the first apparatus based on service data. For example, the service data includes the identification information (identifying a receive end of the service data) of the target receive end. The first apparatus may determine the identification information of the target receive end based on the service data, and indicate the target receive end by using the sidelink signal *.

In this embodiment of this application, the sidelink signal * may alternatively have another name, for example, sidelink information *. A specific name of the sidelink signal * is not limited. The S-SSB* may alternatively have another name. This is not limited.

For ease of description, the following uses an example in which the sidelink signal * indicates one target receive end for description. The following uses an example in which the S-SSB* includes the sidelink signal * for description.

In a possible implementation, the sidelink signal * includes an S-PSS sequence and an S-SSS sequence (or the sidelink signal * is an S-PSS sequence and an S-SSS sequence), and the S-PSS sequence and the S-SSS sequence indicate the target receive end.

It should be noted that the following descriptions of the S-PSS sequence and the S-SSS sequence are merely used as examples, but are not limitations. There may be more combinations of the S-PSS sequence and the S-SSS sequence. This is not limited to the following examples.

With reference to FIG. 2, for example, the S-SSB* includes the S-PSS sequence and the S-SSS sequence. There are two types of S-PSS sequences, there are 336 types of S-SSS sequences, and there are a total of 672 types of combinations of the S-PSS sequences and the S-SSS sequences. Each combination of the S-PSS sequence and the S-SSS sequence represents or is associated with one SL-service set identifier (service set identifier, SSID), and one SL-SSID is associated with one target receive end.

An expression of a combination manner of the S-PSS sequence and the S-SSS sequence is: ${N}_{ID}^{SL} = {N}_{ID , 1}^{SL} + 336 {N}_{ID , 2}^{SL}$ ${N}_{ID , 1}^{SL} ∈ \left\{0,1,…,335\right\} , and {N}_{ID , 2}^{SL} ∈ \left\{0, 1\right\} .$

In conclusion, the target receive end can be indicated by associating the SL-SSID with the target receive end.

When the sidelink signal * includes the S-PSS sequence and the S-SSS sequence (or the sidelink signal * is the S-PSS sequence and the S-SSS sequence), the identification information of the target receive end may be carried in the S-PSS sequence and the S-SSS sequence. For example, different combinations of the S-PSS sequences and the S-SSS sequences represent identification information of different target receive ends. For details, refer to Table 1. Content shown in Table 1 is merely used as an example for understanding, and is not used as final limitation.

**Table 1**

| S-PSS sequence | S-SSS sequence | Identification information of the target receive end |
|---|---|---|
| S-PSS sequence 1 | S-SSS sequence 1 | Identification information 1 |
| S-PSS sequence 2 | S-SSS sequence 2 | Identification information 2 |
| S-PSS sequence 2 | S-SSS sequence 3 | Identification information 3 |
| S-PSS sequence 1 | S-SSS sequence 2 | Identification information 4 |
| S-PSS sequence 1 | S-SSS sequence 3 | Identification information 5 |

As shown in Table 1,
when the S-PSS sequence is the S-PSS sequence 1, and the S-SSS sequence is the S-SSS sequence 1, this represents the identification information 1 (for example, an apparatus 1);
when the S-PSS sequence is the S-PSS sequence 2, and the S-SSS sequence is the S-SSS sequence 2, this represents the identification information 2 (for example, an apparatus 2);
when the S-PSS sequence is the S-PSS sequence 2, and the S-SSS sequence is the S-SSS sequence 3, this represents the identification information 3 (for example, an apparatus 3);
when the S-PSS sequence is the S-PSS sequence 1, and the S-SSS sequence is the S-SSS sequence 2, this represents the identification information 4 (for example, an apparatus 4); and
when the S-PSS sequence is the S-PSS sequence 1, and the S-SSS sequence is the S-SSS sequence 3, this represents the identification information 5 (for example, an apparatus 5).

With reference to Table 1, different combinations of the S-PSS sequences and the S-SSS sequences may represent identification information of different target receive ends. In this way, the identification information of the target receive end can be carried in the S-PSS sequence and the S-SSS sequence.

The S-PSS sequence and the S-SSS sequence are orthogonal sequences of each other. Different target receive ends may be distinguished by using orthogonality between sequences, or different target receive ends may be represented by using a combination of different sequences. In this way, target receive ends can be distinguished.

It should be noted that, in the foregoing content, the target receive end is represented by using both the S-PSS sequence and the S-SSS sequence. However, one of the S-PSS sequence and the S-SSS sequence, for example, only the S-PSS sequence or the S-SSS sequence, may alternatively be used to represent the target receive end. This is not limited.

In a possible implementation, the sidelink signal * includes a reference signal *, and a position of a time-frequency resource corresponding to the reference signal * indicates the target receive end.

With reference to FIG. 2, the S-SSB* includes eight PSBCHs, and the reference signal * is in a PSBCH included in the sidelink signal * (or the sidelink signal * is the PSBCH). In this way, a design of reusing a PSBCH in an existing standard can be used, to avoid a large degree of modification to the existing standard.

For the position of the time-frequency resource corresponding to the reference signal *, refer to FIG. 5 and FIG. 6.

A frequency domain resource in embodiments of this application may be any one or more of a resource element (resource element, RE), a resource block (resource block, RB), a physical resource block (physical resource block, PRB), or the like. This is not limited. For ease of description, the following uses an example in which the frequency domain resource is an RE for description.

The time domain resource in embodiments of this application may be any one or more of a slot (slot), a symbol (symbol), a frame (frame), and the like. This is not limited. For ease of description, the following uses an example in which the time domain resource is a symbol for description.

FIG. 5 is a diagram of a time-frequency resource corresponding to a reference signal according to an embodiment of this application. As shown in FIG. 5, a symbol 5 to a symbol 12 are used for PSBCH transmission, and the reference signal * may be carried in a frequency domain resource corresponding to the symbol 5 to the symbol 12. For example, the reference signal * is carried in a 5^{th} RE and a 6^{th} RE in 12 REs corresponding to the symbol 9. The position of the time-frequency resource corresponding to the reference signal * may be represented as: X=2 (indicating a quantity of REs), k₀=5 (indicating a position of a start RE), and l₀=9 (indicating a position of a start symbol).

In this way, the first apparatus can associate different target receive ends by using different {k₀, l₀}.

When the sidelink signal * includes the reference signal *, the identification information of the target receive end may be carried in the position of the time-frequency resource corresponding to the reference signal *. For example, positions of different time-frequency resources are used to represent identification information of different target receive ends. Refer to Table 2. Content shown in Table 2 is merely used as an example for understanding, and is not used as final limitation.

**Table 2**

| Position of the time-frequency resource corresponding to the reference signal * | Identification information of the target receive end |
|---|---|
| {k₀, l₀} | Identification information 1 |
| {k₁, l₁} | Identification information 2 |
| {k₀, l₁} | Identification information 3 |
| {k₀, l₂} | Identification information 4 |
| {k₃, l₂} | Identification information 5 |

As shown in Table 2,
when the position of the time-frequency resource corresponding to the reference signal * is {k₀, l₀}, this represents the identification information 1 (for example, the apparatus 1);
when the position of the time-frequency resource corresponding to the reference signal * is {k₁, l₁}, this represents the identification information 2 (for example, the apparatus 2);
when the position of the time-frequency resource corresponding to the reference signal * is {k₀, l₁}, this represents the identification information 3 (for example, the apparatus 3);
when the position of the time-frequency resource corresponding to the reference signal * is {k₀, l₂}, this represents the identification information 4 (for example, the apparatus 4); and
when the position of the time-frequency resource corresponding to the reference signal * is {k₃, l₂}, this represents the identification information 5 (for example, an apparatus 5).

With reference to Table 2, positions of time-frequency resources corresponding to different reference signals * may represent identification information of different target receive ends. In this way, the identification information of the target receive end can be carried in the position of the time-frequency resource corresponding to the reference signal *.

In an example, an identifier of the target receive end may be represented as ID = k₀ + k₀ ∗ l₀ (or may be another formula, which is not limited). In this way, the second apparatus can determine the identifier of the target receive end according to the formula, to further determine whether the second apparatus is the target receive end of the S-SSB*.

FIG. 6 is another diagram of a time-frequency resource corresponding to a reference signal according to an embodiment of this application. As shown in FIG. 6, a symbol 5 to a symbol 12 are used for PSBCH transmission, and the reference signal * may be carried in a frequency domain resource corresponding to the symbol 5 to the symbol 12. In this application, the identification information of the target receive end can be further carried based on a pattern of the position of the time-frequency resource corresponding to the reference signal *.

In an example, the pattern of the position of the time-frequency resource corresponding to the reference signal * is a pattern 1. For example, the reference signal * is carried in a 7^{th} RE and an 8^{th} RE in 12 REs respectively corresponding to the symbol 7 and the symbol 8. The position of the time-frequency resource corresponding to the reference signal * is represented as {X=2, k₀=6, l₀=7} and {X=2, k₀=6, l₀=8}.

In another example, the pattern of the position of the time-frequency resource corresponding to the reference signal * is a pattern 2. For example, the reference signal * is carried in a 5^{th} RE and a 6^{th} RE in 12 REs corresponding to the symbol 9. The position of the time-frequency resource corresponding to the reference signal * may be represented as {X=2, k₀=5, l₀=9}.

In still another example, the pattern of the position of the time-frequency resource corresponding to the reference signal * is a pattern 3. For example, the reference signal * is carried in a 7^{th} RE to a 10^{th} RE in 12 REs corresponding to the symbol 12. The position of the time-frequency resource corresponding to the reference signal * may be represented as {X=4, k₀=6, l₀=12}.

When the sidelink signal * includes the reference signal *, the identification information of the target receive end may be carried in the pattern of the position of the time-frequency resource corresponding to the reference signal *. For example, patterns of positions of time-frequency resources corresponding to different reference signals * are used to represent identification information of different target receive ends. Refer to Table 3. Content shown in Table 3 is merely used as an example for understanding, and is not used as final limitation.

**Table 3**

| Pattern of the position of the time-frequency resource corresponding to the reference signal * | Identification information of the target receive end |
|---|---|
| Pattern 1 | Identification information 1 |
| Pattern 2 | Identification information 2 |
| Pattern 3 | Identification information 3 |
| Pattern 4 | Identification information 4 |

As shown in Table 3,
when the pattern of the position of the time-frequency resource corresponding to the reference signal * is the pattern 1, this represents the identification information 1 (for example, the apparatus 1);
when the pattern of the position of the time-frequency resource corresponding to the reference signal * is the pattern 2, this represents the identification information 2 (for example, the apparatus 2);
when the pattern of the position of the time-frequency resource corresponding to the reference signal * is the pattern 3, this represents the identification information 3 (for example, the apparatus 3); and
when the pattern of the position of the time-frequency resource corresponding to the reference signal * is the pattern 4, this represents the identification information 4 (for example, the apparatus 4).

With reference to Table 3, patterns of positions of time-frequency resources corresponding to different reference signals * may represent identification information of different target receive ends. In this way, the identification information of the target receive end can be carried in the pattern of the position of the time-frequency resource corresponding to the reference signal *.

In this embodiment of this application, a plurality of patterns and a correspondence between a pattern and identification information may be predefined or preconfigured. In this way, the second apparatus can determine the identification information of the target receive end based on the correspondence and a pattern of the location of the time-frequency resource corresponding to the reference signal* is a preconfigured pattern.

Optionally, in this embodiment of this application, the identification information of the target receive end can be further represented with reference to both the position of the time-frequency resource corresponding to the reference signal * and the pattern of the position of the time-frequency resource corresponding to the reference signal *.

For example, the position of the time-frequency resource corresponding to the reference signal * is {k₀, l₀}, the pattern of the position of the time-frequency resource corresponding to the reference signal * is the pattern 1, and this represents the identification information 1 (for example, the apparatus 1); and the position of the time-frequency resource corresponding to the reference signal * is {k₀, l₁}, the pattern of the position of the time-frequency resource corresponding to the reference signal * is the pattern 1, and this represents the identification information 2 (for example, the apparatus 2). In this way, a quantity of target receive ends that can be represented.

In the foregoing descriptions, the reference signal * may be an SL-CSI-RS, or may be an SL demodulation reference signal (demodulation reference signal, DMRS). In this way, the target receive end can be indicated by using a position of a time-frequency resource corresponding to the SL-CSI-RS, or the target receive end can be indicated by using a position of a time-frequency resource corresponding to the SL-DMRS.

In conclusion, positions of time-frequency resources corresponding to different reference signals may represent different target receive ends, and different target receive ends can be distinguished.

In a possible implementation, the sidelink signal * includes a physical sidelink feedback channel (physical sidelink feedback channel, PSFCH) (or the sidelink signal * is the PSFCH), and a frequency domain resource corresponding to the PSFCH and a cyclic shift in the frequency domain resource indicate the target receive end.

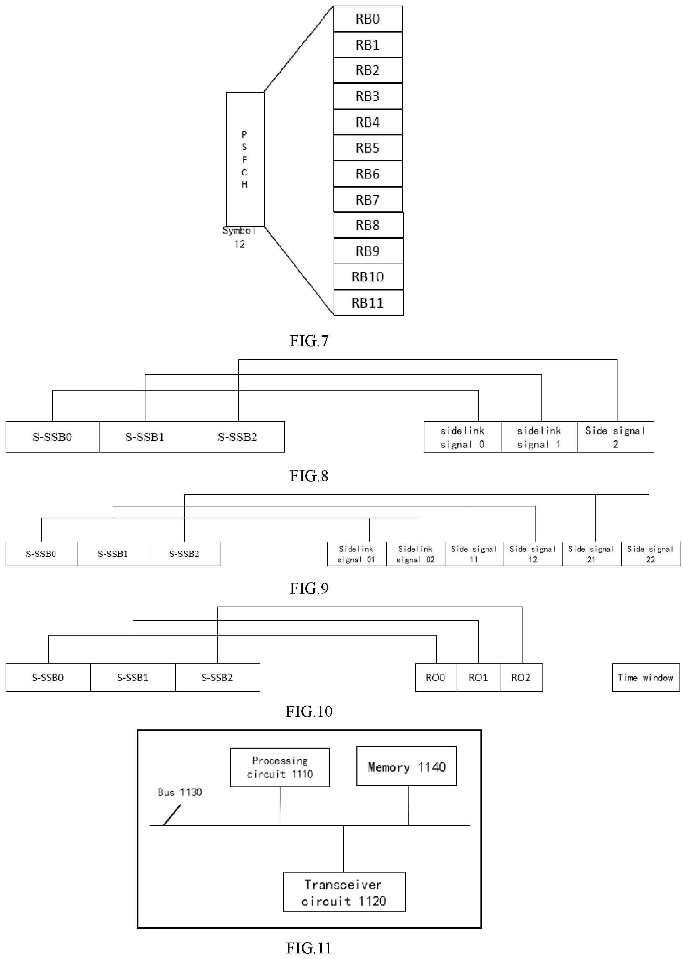

With reference to FIG. 3, an S-SSB includes eight PSBCHs, one (or more) of the eight PSBCHs may be replaced with a PSFCH, and the target receive end is indicated by using a frequency domain resource corresponding to the PSFCH and a cyclic shift in the frequency domain resource. For descriptions of the frequency domain resource corresponding to the PSFCH and the cyclic shift in the frequency domain resource, refer to FIG. 7.

FIG. 7 is a diagram of a time-frequency resource of a PSFCH according to an embodiment of this application. As shown in FIG. 7, for example, the PSFCH is carried on a 12^{th} symbol in an S-SSB* (or an 8^{th} PSBCH in the S-SSB* is replaced with the PSFCH). The PSFCH symbol corresponds to 11 RBs, each RB has 12 cyclic shifts, and the 11 RBs and the cyclic shifts in the 11 RBs may be used for representing identifiers of 132 different target receive ends.

For example, the PSFCH supports generation of 12 distinguishable PSFCH sequences, and each PSFCH sequence is code-division multiplexed on one RB for sending. In one PSFCH symbol, assuming that one sub-channel includes 10 RBs, and a resource pool includes a total of three sub-channels, the resource pool includes a total of 3*10=30 RBs that may be used for PSFCH transmission. Therefore, a total of 30*12=360 different target receive ends may be identified.

In conclusion, different frequency domain resources and cyclic shifts may represent different target receive ends, and different target receive ends can be distinguished.

It should be noted that, in the foregoing content, the target receive end is represented by using both the frequency domain resource and the cyclic shift. However, the target receive end may alternatively be represented by using one of the frequency domain resource and the cyclic shift, for example, by using only the frequency domain resource or the cyclic shift. This is not limited.

Different embodiments of the sidelink signal * may be combined with each other. For example, the sidelink signal * includes an S-PSS sequence, an S-SSS sequence, and a reference signal *. For example, the sidelink signal * includes an S-PSS sequence, an S-SSS sequence, and a PSFCH. For example, the sidelink signal * includes a reference signal * and a PSFCH. In this way, a plurality of target receive ends can be indicated.

The foregoing content is described by using an example in which the S-SSB* includes the sidelink signal * and an example of a structure of the sidelink signal *. The foregoing descriptions are also applicable to the descriptions in which the S-SSB* is associated with the sidelink signal *. For the latter, for the sidelink signal *, refer to the foregoing descriptions. Details are not described.

S402: The first apparatus sends the S-SSB* to the second apparatus.

Correspondingly, the second apparatus receives the S-SSB*.

The first apparatus may send the S-SSB* to a plurality of apparatuses in a broadcast manner.

The first apparatus may send the S-SSB* to the plurality of apparatuses in a multicast manner.

If the S-SSB* includes the sidelink signal *, the second apparatus may determine, based on the sidelink signal *, whether the second apparatus is the target receive end of the S-SSB*.

If the S-SSB* does not include the sidelink signal *, and the S-SSB* is associated with the sidelink signal *, the first apparatus may further send the sidelink signal * to the second apparatus, and the second apparatus may determine, based on the sidelink signal *, whether the second apparatus is the target receive end of the S-SSB*.

If the S-SSB* does not include the sidelink signal *, and the S-SSB* is associated with the sidelink signal *, the first apparatus does not send the sidelink signal * to the second apparatus, the sidelink signal * associated with the S-SSB* may be preconfigured in the second apparatus, and the sidelink signal * is indicated in another manner. For example, one or more bits are carried in the S-SSB* (for example, a structure of the S-SSB* may be modified), to indicate the sidelink signal * associated with the S-SSB* to the second apparatus. In this way, the second apparatus can determine, based on the sidelink signal *, whether the second apparatus is the target receive end of the S-SSB*. Alternatively, a correspondence between an S-SSB and a reference signal may be preconfigured. When the first apparatus sends a plurality of S-SSBs to the second apparatus, and each S-SSB is associated with one sidelink signal, the second apparatus determines, based on the foregoing correspondence between the S-SSB and the sidelink signal, the sidelink signal corresponding to each S-SSB, to determine whether the second apparatus is the target receive end.

In a possible implementation, that the first apparatus sends the S-SSB* to the second apparatus may include: The first apparatus sends the sidelink signal * and the S-SSB* to the second apparatus.

The sidelink signal * may be included in the S-SSB*, or may be independent of the S-SSB*. This is not limited. When the sidelink signal * is included in the S-SSB*, the sidelink signal * and the S-SSB* may be sent by using same information, or the sidelink signal * and the S-SSB* may be sent simultaneously. This may be understood as that the first apparatus sends the sidelink signal * and the S-SSB* to the second apparatus.

When the sidelink signal * is independent of the S-SSB*, the sidelink signal * and the S-SSB* may be sent by using two different pieces of information, or the sidelink signal * and the S-SSB* may not be sent simultaneously. This may be understood as that the first apparatus separately sends the sidelink signal * and the S-SSB* to the second apparatus. In this way, the second apparatus can determine, based on the sidelink signal *, whether the second apparatus is the target receive end of the S-SSB*.

In conclusion, the second apparatus may determine, based on the sidelink signal *, whether the second apparatus is the target receive end of the S-SSB*.

In conclusion, the first apparatus sends the S-SSB to the second apparatus, where the S-SSB includes or is associated with the sidelink signal, the sidelink signal indicates at least one target receive end, and the target receive end is a receive end of the S-SSB. The second apparatus may determine, based on the at least one target receive end indicated by the sidelink signal, whether the second apparatus is the target receive end of the S-SSB. If the second apparatus is the target receive end, the second apparatus feeds back the S-SSB. If the second apparatus is not the target receive end, the second apparatus does not feed back the S-SSB.

In comparison with a solution in which the second apparatus feeds back all received S-SSBs, in the foregoing solution, the second apparatus can feed back only an S-SSB whose target receive end is the second apparatus, so that overall power consumption and resource overheads of the receive end in a beam management process can be effectively reduced. For example, the receive end does not need to feed back a measurement result of each sidelink synchronization signal and physical broadcast channel block to the transmit end.

In conclusion, when sending the S-SSB to the receive end, the transmit end may indicate, to the receive end, whether the receive end is the target receive end of the S-SSB, and the receive end may feed back only the S-SSB whose target receive end is the receive end. This helps reduce overall power consumption of the receive end in a beam management process and resource overheads of the receive end.

Optionally, the method may further include the following step.

S403: The second apparatus sends the measurement result of the S-SSB* to the first apparatus.

Correspondingly, the first apparatus receives the measurement result of the S-SSB*.

After receiving the S-SSB*, the second apparatus may determine, based on the sidelink signal *, whether the second apparatus is the target receive end of the S-SSB*.

For example, when it is determined that the second apparatus is the target receive end of the S-SSB*, the second apparatus measures and feeds back the S-SSB*.

For example, when it is determined that the second apparatus is not the target receive end of the S-SSB*, the second apparatus may not measure or feed back the S-SSB*.

In conclusion, when it is determined that the second apparatus is the target receive end of the S-SSB*, the second apparatus measures the S-SSB*, and sends the measurement result of the S-SSB* to the first apparatus. This helps implement the beam management between the first apparatus and the second apparatus, and can determine a proper beam pair between the first apparatus and the second apparatus.

In a possible implementation, the second apparatus may determine, based on the following conditions, whether to send the measurement result of the S-SSB* to the first apparatus:
1- The measurement result of S-SSB* exceeds a threshold.
2- The measurement result of S-SSB* is a maximum value.
3- The measurement result of S-SSB* is a maximum value and exceeds the threshold.

If the measurement result of the S-SSB* does not exceed the threshold, the second apparatus may not send the measurement result of the S-SSB* to the first apparatus. If the measurement result of the S-SSB* is not the maximum value, the second apparatus may not send the measurement result of the S-SSB* to the first apparatus. If the measurement result of the S-SSB* is the maximum value but does not exceed the threshold, the second apparatus may not send the measurement result of the S-SSB* to the first apparatus. In this way, overall power consumption and resource overheads of the second apparatus can be effectively reduced.

In addition, the first apparatus may send a plurality of S-SSBs to the second apparatus, and each S-SSB is associated with one sidelink signal. Refer to FIG. 8 and FIG. 9.

FIG. 8 is a diagram of a correspondence between an S-SSB and a sidelink signal according to an embodiment of this application. As shown in FIG. 8, the first apparatus continuously sends an S-SSB0, an S-SSB1, an S-SSB2, a sidelink signal 0, a sidelink signal 1, and a sidelink signal 2 to the second apparatus. The S-SSB0 is associated with the sidelink signal 0, the S-SSB1 is associated with the sidelink signal 1, and the S-SSB2 is associated with the sidelink signal 2. A one-to-one correspondence exists between a position of a time-frequency resource occupied by an S-SSB and a position of a time domain resource occupied by a sidelink signal. In this way, after the second apparatus receives the S-SSB0, the S-SSB1, the S-SSB2, the sidelink signal 0, the sidelink signal 1, and the sidelink signal 2, the second apparatus can determine, based on a mapping relationship between the S-SSB and the sidelink signal, that the S-SSB0 is associated with the sidelink signal 0, the S-SSB1 is associated with the sidelink signal 1, and the S-SSB2 is associated with the sidelink signal 2.

The second apparatus may determine, based on the sidelink signal, whether a target receive end of a corresponding S-SSB is the second apparatus, and measure and feed back only an S-SSB whose target receive end is the second apparatus.

It should be noted that the correspondence between the position of the time-frequency resource occupied by the S-SSB and the position of the time-frequency resource occupied by the sidelink signal may be predefined, configured, or preconfigured.

It may be understood that "predefine" may be understood as that information is defined in a standard, does not need to be configured by another device (nor changed by a network device or another terminal device), and is pre-recorded/pre-written in hardware and/or software of a terminal device.

It may be understood that "configure" includes configuration performed by a network device and configuration performed by a terminal device. If the configuration is performed by the network device, the configuration may be changed by using a system information block (system information block, SIB) or radio resource control (radio resource control, RRC) signaling. If the configuration is performed by the terminal device, the configuration may be changed based on PC5-RRC signaling.

It may be understood that "preconfigure" may be understood as that information is prerecorded/pre-written in hardware and/or software of the terminal device, is determined by a device manufacturer, and may be changed by using software or hardware.

After obtaining measurement results of the plurality of S-SSBs, the second apparatus may determine, based on the foregoing conditions, the measurement result of the S-SSB that needs to be fed back. In this way, resource overheads of the second apparatus can be effectively reduced.

FIG. 9 is a diagram of another correspondence between an S-SSB and a sidelink signal according to an embodiment of this application. As shown in FIG. 9, each S-SSB is associated with two sidelink signals, and each sidelink signal indicates one target receive end. For example, an S-SSB0 is associated with a sidelink signal 01 and a sidelink signal 02, and the sidelink signal 01 and the sidelink signal 02 respectively indicate one target receive end; an S-SSB1 is associated with a sidelink signal 11 and a sidelink signal 12, and the sidelink signal 11 and the sidelink signal 12 respectively indicate one target receive end; and an S-SSB2 is associated with a sidelink signal 21 and a sidelink signal 22, and the sidelink signal 21 and the sidelink signal 22 respectively indicate one target receive end. A one-to-one mapping relationship exists between each S-SSB and an associated sidelink signal. For specific descriptions, refer to the descriptions in FIG. 8. Details are not described.

In this way, a plurality of target receive ends can be indicated, and transmission efficiency can be improved.

It should be noted that the content shown in FIG. 8 and FIG. 9 is described by using an example in which a time-frequency resource occupied by an S-SSB is different from a time domain resource occupied by a sidelink signal, and a frequency domain resource occupied by the S-SSB is the same as a frequency domain resource occupied by the sidelink signal. However, a scenario in which the time-frequency resource occupied by the S-SSB is the same as the time domain resource occupied by the sidelink signal and the frequency domain resource occupied by the S-SSB is different from the frequency domain resource occupied by the sidelink signal is not limited.

Therefore, in this embodiment of this application, the time-frequency resource occupied by the S-SSB is different from the time-frequency resource occupied by the sidelink signal. That the time-frequency resource occupied by the S-SSB is different from the time-frequency resource occupied by the sidelink signal may include: A time domain resource occupied by the S-SSB is the same as the time domain resource occupied by the sidelink signal, and the frequency domain resource occupied by the S-SSB is different from the frequency domain resource occupied by the sidelink signal; or the time domain resource occupied by the S-SSB is different from the time domain resource occupied by the sidelink signal, and the frequency domain resource occupied by the S-SSB is the same as the frequency domain resource occupied by the sidelink signal; or the time domain resource occupied by the S-SSB is different from the time domain resource occupied by the sidelink signal, and the frequency domain resource occupied by the S-SSB is different from the frequency domain resource occupied by the sidelink signal. When the second apparatus sends the S-SSB* measurement result to the first apparatus, the second apparatus may send the measurement result of the S-SSB* on a corresponding report occasion (report occasion, RO). Refer to FIG. 10.

FIG. 10 is a diagram of a correspondence between an S-SSB and a report occasion according to an embodiment of this application. As shown in FIG. 10, the second apparatus receives an S-SSB0, an S-SSB1, and an S-SSB2 respectively, and the second apparatus sends a measurement result of an S-SSB on a corresponding RO. For example, a measurement result of the S-SSB0 is reported on an RO0, a measurement result of the S-SSB1 is reported on an RO1, and a measurement result of the S-SSB2 is reported on an RO2.

A mapping relationship between the S-SSB and the RO may be predefined, or may be preconfigured. This is not limited.

It may be understood that "predefine" may be understood as that information is defined in a standard, does not need to be configured by another device (nor changed by a network device or another terminal device), and is pre-recorded/pre-written in hardware and/or software of a terminal device.

It may be understood that "configure" includes configuration performed by a network device and configuration performed by a terminal device. If the configuration is performed by the network device, the configuration may be changed by using a SIB or RRC signaling. If the configuration is performed by the terminal device, the configuration may be changed based on PC5-RRC signaling.

It may be understood that "preconfigure" may be understood as that information is prerecorded/pre-written in hardware and/or software of the terminal device, is determined by a device manufacturer, and may be changed by using software or hardware.

The RO may alternatively be a resource used for feeding back the measurement result of the S-SSB. For example, the RO may be a feedback resource or a resource, and the second apparatus sends a measurement result of a corresponding S-SSB to the first apparatus by using the resource.

After the measurement result of the S-SSB* sent by the second apparatus is received, the first apparatus and the second apparatus need to perform further communication by using a determined beam in a same time window (window) (where reference signal received power (reference signal received power, RSRP) obtained by measuring the S-SSB2 by the second apparatus is the highest, and feedback is performed on the RO2; and in the window, the first apparatus uses a beam corresponding to the S-SSB2, and the second apparatus uses a beam corresponding to the RO2). For example, the first apparatus sends link establishment information to the second apparatus by using the beam corresponding to the S-SSB2, and the second apparatus receives the link establishment information by using the beam corresponding to the RO2. Each group of an S-SSB and an RO corresponds to one time window.

In a scenario in which identification information of a plurality of target receive ends is indicated, the first apparatus needs to separately send link establishment information to a corresponding apparatus in a plurality of time windows by using different beams. If the second apparatus feeds back both an identifier of the first apparatus and an identifier of the second apparatus, the first apparatus may send link establishment information corresponding to the second apparatus in a corresponding time window. Otherwise, the first apparatus needs to send a plurality of pieces of link establishment information in each time window, and the plurality of pieces of link establishment information respectively correspond to different apparatuses.

Optionally, the second apparatus may further carry the identification information of the first apparatus when sending the measurement result of the S-SSB to the first apparatus. In this way, the first apparatus can determine that the measurement result of the S-SSB sent by the second apparatus corresponds to the S-SSB sent by the first apparatus to the second apparatus.

In the foregoing solution, the S-SSB* may further indicate the identification information of the first apparatus. For example, the S-SSB* includes the sidelink signal *, the sidelink signal * is an S-PSS sequence and an S-SSS sequence, and the identification information of the first apparatus is carried in a reference signal *. For example, the S-SSB* includes the sidelink signal *, the sidelink signal * is an S-PSS sequence and an S-SSS sequence, and the identification information of the first apparatus is carried in a PSFCH. For example, the S-SSB* includes the sidelink signal *, the sidelink signal * is a reference signal *, and the identification information of the first apparatus is carried in an S-PSS sequence and an S-SSS sequence. For example, the S-SSB* is associated with the sidelink signal *, and the identification information of the first apparatus may be carried in an S-PSS sequence, an S-SSS sequence, and the like.

In conclusion, the foregoing descriptions about the identification information of the target receive end is also applicable to carrying the identification information of the first apparatus. Details are not described.

In addition, for determining the identification information of the first apparatus, refer to the foregoing descriptions about how to determine the target receive end. Details are not described.

The foregoing content is described by using an example in which the sidelink signal * indicates the target receive end. The S-SSB* may further indicate the transmit end. In this way, the second apparatus can determine the transmit end of the S-SSB*, and this helps feed back the measurement result of the S-SSB* to a corresponding apparatus.

In a possible implementation, the S-SSB* may indicate both the transmit end and the target receive end.

Specifically, for example, the sidelink signal * in the S-SSB* indicates the transmit end, and the S-PSS sequence and the S-SSS sequence in the S-SSB* indicate the target receive end; or the sidelink signal * in the S-SSB* indicates the target receive end, and the S-PSS sequence and the S-SSS sequence in the S-SSB* indicate the transmit end. In this way, the second apparatus can determine the transmit end and the target receive end of the S-SSB*.

In a possible implementation, the S-SSB* may indicate the target receive end, and the sidelink signal * indicates the transmit end. When the target receive end is indicated by using the S-SSB*, the target receive end may be indicated by using the S-PSS sequence and the S-SSS sequence in the S-SSB*, and the transmit end may be indicated by using the sidelink signal. In this way, the second apparatus can determine the transmit end and the target receive end of the S-SSB*.

Finally, apparatus embodiments in embodiments of this application are described.

To implement functions in the method provided in this application, the first apparatus and the second apparatus may both include a hardware structure and/or a software module, to implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

FIG. 11 is a block diagram of a communication apparatus according to an embodiment of this application. The communication apparatus includes a processing circuit 1110 and a transceiver circuit 1120. The processing circuit 1110 and the transceiver circuit 1120 may be connected to each other through a bus 1130. The communication apparatus may be a first apparatus or a second apparatus.

Optionally, the communication apparatus may further include a memory 1140. The memory 1140 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1140 is configured to store related instructions and data.

The processing circuit 1110 may be one or more central processing circuits (central processing units, CPUs). When the processing circuit 1110 is one CPU, the CPU may be a single-core CPU or a multi-core CPU.

The processing circuit 1110 may be a signal processor, a chip, another integrated circuit that can implement the method in this application, or a part of a circuit that is in the foregoing processor, chip, or integrated circuit and that is configured to perform a processing function.

The transceiver circuit 1120 may also be a transceiver or an input/output interface. The input/output interface is configured to input or output a signal or data, and may also be referred to as an input/output circuit.

When the communication apparatus is the first apparatus, for example, the processing circuit 1110 is configured to perform the following operations: determining an S-SSB*; sending the S-SSB*; and the like.

When the communication apparatus is the second apparatus, for example, the processing circuit 1110 is configured to perform the following operations: receiving an S-SSB*; determining, based on a sidelink signal *, that the second apparatus is a target receive end of the S-SSB*; and the like.

The foregoing content is merely used as an example for description. When the communication apparatus is the first apparatus or the second apparatus, the communication apparatus is responsible for performing the method or steps related to the first apparatus or the second apparatus in the foregoing method embodiment.

When the communication apparatus is the first apparatus or the second apparatus, the transceiver circuit 1120 may be a transceiver. When the communication apparatus is a chip used in the first apparatus or the second apparatus, the transceiver circuit 1120 may be an input/output circuit. The foregoing descriptions are merely an example for description.

For specific content, refer to the content shown in the foregoing method embodiment.

For implementations of the operations in FIG. 11, refer to the corresponding descriptions of the method embodiment shown in FIG. 4.

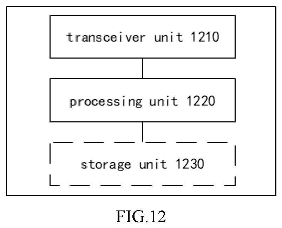

FIG. 12 is a block diagram of another communication apparatus according to an embodiment of this application. The communication apparatus may be a first apparatus or a second apparatus, and is configured to implement the method in the foregoing embodiment.

The communication apparatus includes a transceiver unit 1210 and a processing unit 1220. The following describes the transceiver unit 1210 and the processing unit 1220 by using examples.

The transceiver unit 1210 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described again below.

When the communication apparatus is the first apparatus, for example, the transceiver unit 1210 is configured to send an S-SSB*, and the processing unit 1220 is configured to determine the S-SSB*. The processing unit 1220 may be further configured to perform content related to steps such as processing and control of the first apparatus.

When the communication apparatus is the second apparatus, for example, the transceiver unit 1210 is configured to receive an S-SSB*, and the processing unit 1220 is configured to determine, based on a sidelink signal *, that the second apparatus is a target receive end of the S-SSB*. The processing unit 1220 may be further configured to perform content related to steps such as processing and control of the second apparatus.

When the communication apparatus is the first apparatus or the second apparatus, the communication apparatus is responsible for performing one or more of the method or steps related to the first apparatus or the second apparatus in the foregoing method embodiment.

Optionally, the communication apparatus further includes a storage unit 1230. The storage unit 1230 is configured to store a program or code for performing the foregoing method.

The transceiver unit in FIG. 12 may correspond to the transceiver circuit in FIG. 11, and the processing unit in FIG. 12 may correspond to the processing circuit in FIG. 11.

The apparatus embodiments shown in FIG. 11 and FIG. 12 are used for implementing the content described in FIG. 4.

For specific execution steps and methods of the apparatuses shown in FIG. 11 and FIG. 12, refer to the content described in the foregoing method embodiment.

This application further provides a chip, including a processor. The processor is configured to invoke instructions from a memory and run the instructions stored in the memory, to cause a communication device on which the chip is installed to perform the method in the foregoing examples. The memory may be integrated into the chip, or located outside the chip.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or the code.

This application further provides a processor, configured to be coupled to a memory, and configured to perform a method and a function related to the network device or the terminal device in any one of the foregoing embodiments.

Another embodiment of this application provides a computer program product including instructions. When the computer program product is run on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any other proper types of memories.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions or computer programs. When the computer instructions or computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, computer instructions may be transmitted from a website, computer, server, or data center to another website, computer, server, or data center in a wired or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiment. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions of embodiments. In addition, functional units in embodiments of this application may be integrated into one processing unit, each of the units may exist alone physically, or two or more units are integrated into one unit. When the functions are implemented in a form of software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash disk, a removable hard disk, a read-only memory, a random access memory, a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

## Claims

1. A communication method, comprising:
determining a sidelink synchronization signal and physical broadcast channel block, wherein the sidelink synchronization signal and physical broadcast channel block comprises a sidelink signal, or the sidelink synchronization signal and physical broadcast channel block is associated with the sidelink signal, and the sidelink signal indicates at least one target receive end; and
sending the sidelink synchronization signal and physical broadcast channel block.

2. The method according to claim 1, wherein the sidelink signal comprises a sidelink primary synchronization signal sequence and/or a sidelink secondary synchronization signal sequence, and the sidelink primary synchronization signal sequence and/or the sidelink secondary synchronization signal sequence indicate/indicates the at least one target receive end.

3. The method according to claim 1, wherein the sidelink signal comprises a physical sidelink feedback channel, and a frequency domain resource corresponding to the physical sidelink feedback channel and/or a cyclic shift in the frequency domain resource indicate/indicates the at least one target receive end.

4. The method according to claim 1, wherein the sidelink signal comprises a reference signal, and a position of a time-frequency resource corresponding to the reference signal indicates the at least one target receive end.

5. The method according to claim 4, wherein the reference signal is in a physical sidelink broadcast channel comprised in the sidelink signal.

6. The method according to claim 4 or 5, wherein the reference signal is a sidelink channel state information reference signal or a sidelink demodulation reference signal.

7. The method according to any one of claims 1 to 6, wherein the sidelink signal comprises at least one piece of identification information, and the at least one piece of identification information is in one-to-one correspondence with the at least one target receive end.

8. The method according to any one of claims 1 to 7, wherein the sidelink synchronization signal and physical broadcast channel block indicates a transmit end.

9. The method according to any one of claims 1 to 8, wherein the determining the sidelink synchronization signal and physical broadcast channel block comprises:
determining at least two sidelink synchronization signal and physical broadcast channel blocks, wherein the at least two sidelink synchronization signal and physical broadcast channel blocks are associated with at least two sidelink signals; and
a one-to-one mapping relationship exists between a position of a time-frequency resource occupied by each of the at least two sidelink synchronization signal and physical broadcast channel blocks and a position of a time-frequency resource occupied by a corresponding sidelink signal in the at least two sidelink signals; and
the sending the sidelink synchronization signal and physical broadcast channel block comprises:
sending the at least two sidelink synchronization signal and physical broadcast channel blocks.

10. A communication method, applied in a second apparatus, comprising:
receiving a sidelink synchronization signal and physical broadcast channel block, wherein the sidelink synchronization signal and physical broadcast channel block comprises a sidelink signal, or the sidelink synchronization signal and physical broadcast channel block is associated with the sidelink signal, and the sidelink signal indicates at least one target receive end; and
determining the second apparatus is a target receive end of the sidelink synchronization signal and physical broadcast channel block based on the sidelink signal.

11. The method according to claim 10, wherein the sidelink signal comprises a sidelink primary synchronization signal sequence and/or a sidelink secondary synchronization signal sequence, and the sidelink primary synchronization signal sequence and/or the sidelink secondary synchronization signal sequence indicate/indicates the at least one target receive end.

12. The method according to claim 10, wherein the sidelink signal comprises a physical sidelink feedback channel, and a frequency domain resource corresponding to the physical sidelink feedback channel and/or a cyclic shift in the frequency domain resource indicate/indicates the at least one target receive end.

13. The method according to claim 10, wherein the sidelink signal comprises a reference signal, and a position of a time-frequency resource corresponding to the reference signal indicates the at least one target receive end.

14. The method according to claim 13, wherein the reference signal is in a physical sidelink broadcast channel comprised in the sidelink signal.

15. The method according to any one of claims 10 to 14, wherein the sidelink signal comprises at least one piece of identification information, and the at least one piece of identification information is in one-to-one correspondence with the at least one target receive end.

16. The method according to any one of claims 10 to 15, wherein the sidelink synchronization signal and physical broadcast channel block indicates a transmit end.

17. The method according to any one of claims 13 to 16, wherein the reference signal is a sidelink channel state information reference signal or a sidelink demodulation reference signal.

18. The method according to any one of claims 10 to 17, wherein the receiving the sidelink synchronization signal and physical broadcast channel block comprises:
receiving at least two sidelink synchronization signal and physical broadcast channel blocks, wherein the at least two sidelink synchronization signal and physical broadcast channel blocks are associated with at least two sidelink signals; and
a one-to-one mapping relationship exists between a position of a time-frequency resource occupied by each of the at least two sidelink synchronization signal and physical broadcast channel blocks and a position of a time-frequency resource occupied by a corresponding sidelink signal in the at least two sidelink signals.

19. The method according to any one of claims 10 to 18, wherein the method further comprises:
sending a measurement result of the sidelink synchronization signal and physical broadcast channel block.

20. A communication apparatus, comprising a module configured to perform the method according to any one of claims 1 to 9 or claims 10 to 19.

21. A communication apparatus, comprising a processor, configured to execute computer instructions stored in a memory,
to cause the communication apparatus to perform the method according to any one of claims 1 to 9; or
to cause the communication apparatus to perform the method according to any one of claims 10 to 19.

22. The communication apparatus according to claim 21, wherein the communication apparatus further comprises the memory.

23. The communication apparatus according to claim 21 or 22, wherein the communication apparatus further comprises a communication interface, the communication interface is coupled to the processor, and the communication interface is configured to input and/or output information.

24. A chip, wherein the chip is connected to a memory, and
the chip is configured to read and execute a software program stored in the memory,
to perform the method according to any one of claims 1 to 9 or
claims 10 to 19.

25. A computer-readable storage medium, wherein the computer-readable storage medium stores computer instructions, and
when the computer instructions are run on a computer,
the method according to any one of claims 1 to 9 is performed, or
the method according to any one of claims 10 to 19 is performed.

26. A computer program product, wherein the computer program product comprises computer program code, and
when the computer program code is run on a computer,
the method according to any one of claims 1 to 9 is performed, or
the method according to any one of claims 10 to 19 is performed.
